# EUROPEAN PATENT SPECIFICATION

(11) **EP 2 960 268 B1**
(45) Date of publication and mention of the grant of the patent: **31.08.2016**
(21) Application number: 15169907.1
(22) Date of filing: 24.07.2014
(51) Int. Cl.: C08G 77/448, C08G 64/18

(54) **Phenolic compounds as end-capping agents for polysiloxanes in polycarbonate-polysiloxane block copolymers**
Phenolische verbindungen als endgruppenverschlussmittel für polysiloxane in polycarbonat-polysiloxan-blockcopolymeren
Composés phénoliques en tant qu'agents de coiffage d'extrémité pour polysiloxanes dans des copolymères séquencés de polycarbonate-polysiloxane

(30) Priority: 24.07.2013 US 201361857955 P
(43) Date of publication of application: 30.12.2015
(62) Divisional of application: 14767123.4
(73) Proprietor: SABIC Global Technologies B.V., 4612 PX Bergen op Zoom (NL)
(72) Inventor: Groote, Ramon, 4612 PX Bergen op Zoom (NL); De Brouwer, Hans, 4612 PX Bergen op Zoom (NL); Van De Grampel, Robert, 4612 PX Bergen op Zoom (NL)
(74) Representative: Modiano, Micaela Nadia

(56) References cited:
- US-A- 5 916 980
- US-B2- 6 340 737

## Description

### TECHNICAL FIELD

The present disclosure is directed to the use of phenolic compounds as replacements for eugenol as end-capping agents in polysiloxanes, such as eugenol end-capped polysiloxanes that are used to prepare polycarbonate-polysiloxane copolymers.

### BACKGROUND

Polycarbonate-polysiloxane block copolymers have been recognized for their ductility and impact strength at low temperatures, as well as flame retardance. Eugenol end-capped polysiloxanes are often used as the source of the polysiloxane blocks, as they include terminal phenolic groups to copolymerize with other compounds to form the polycarbonate blocks.

Being a natural product, eugenol can be quite costly and its market volume is governed by natural availability. Synthetic alternatives to eugenol as an end-capping agent for polysiloxanes are highly desirable.

Polycarbonate-polydiorganosiloxane block copolymers based on _{α,ω}-bis(4-hydroxyphenylethyl)organopolysiloxanes are known from US6340737 and US5916980.

### SUMMARY

In one aspect, disclosed herein is a polycarbonate-polydiorganosiloxane block copolymer, comprising:
(a) at least one block derived from a compound of formula (IIIa): 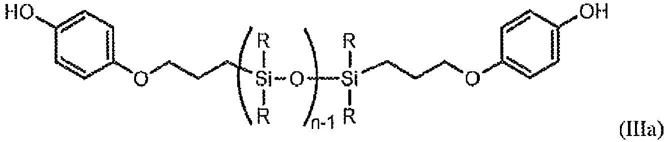 wherein:
   each R is independently a C₁-C₁₃ monovalent organic group; and
   n is 2 to 200; and
(b) at least one block comprising repeating units derived from one or more monomers of formula (iii) and a carbonate precursor:

   HO-A¹-Y-A²-OH (iii)

   wherein:
   each of A¹ and A² comprises a monocyclic divalent arylene group; and
   Y is a bridging group comprising one or two member atoms.

Other aspects and embodiments will become apparent in light of the following description.

### DETAILED DESCRIPTION

The present disclosure is directed to alternatives to eugenol end-capped polysiloxanes. Eugenol is a natural product that is isolated from certain essential oils, such as those from clove. Because clove is a seasonal crop, its production and availability can fluctuate accordingly. To avoid uncertainty, fluctuating availability and cost associated with using eugenol as an end-capping group, the inventors have identified synthetic alternatives to eugenol for use as end-capping agents for polysiloxanes. These alternative end-capped polysiloxanes can then be used to prepare polycarbonate-polysiloxane copolymers.

Unless otherwise defined, all technical and scientific terms used herein have the same meaning as commonly understood by one of ordinary skill in the art. In case of conflict, the present document, including definitions, will control. Preferred methods and materials are described below, although methods and materials similar or equivalent to those described herein can be used in practice or testing of the present invention. The materials, methods, and examples disclosed herein are illustrative only and not intended to be limiting.

The terms "comprise(s)," "include(s)," "having," "has," "can," "contain(s)," and variants thereof, as used herein, are intended to be open-ended transitional phrases, terms, or words that do not preclude the possibility of additional acts or structures. The singular forms "a," "and" and "the" include plural references unless the contest clearly dictates otherwise. The present disclosure also contemplates other embodiments "comprising," "consisting of" and "consisting essentially of," the embodiments or elements presented herein, whether explicitly set forth or not.

"Alkenyl" as used herein may mean a linear, branched, or cyclic hydrocarbyl group having at least one carbon-carbon double bond, such as a vinyl group, an allyl group, an isopropenyl group, or the like.

"Alkoxy" as used herein refers to the structure -OR, wherein R is alkyl as defined herein.

"Alkyl" as used herein may mean a linear, branched, or cyclic hydrocarbyl group, such as a methyl group, ethyl group, n-propyl group, isopropyl group, n-butyl group, isobutyl group, tert-butyl group, n-pentyl group, isopentyl group, n-hexyl group, isohexyl group, cyclopentyl group, cyclohexyl group, or the like.

"Alkylene" or "alkylenyl" as used herein may mean a divalent alkyl, as defined herein, such as -CH₂-, -CH₂CH₂-, -CH₂CH₂CH₂-, -CH₂CH(CH₃)CH₂-, or the like.

"Alkynyl" as used herein may mean a lineal, branched, or cyclic hydrocarbyl group having at least one carbon-carbon triple bond, such as an ethynyl group, a propargyl group, or the like.

"Aryl" as used herein may mean substituted or unsubstituted aryl radicals containing from 6 to 36 ring carbon atoms. Examples of aryl include, but are not limited to, a phenyl group, a naphthyl group, a bicyclic hydrocarbon fused ring system, or a tricyclic hydrocarbon fused ring system wherein one or more of the rings are a phenyl group.

"Arylene" or "arylenyl" as used herein may mean a divalent aryl, as defined herein, such as o-phenylene, m-phenylene or p-phenylene.

"Aryloxy" as used herein refers to the structure -OR, wherein R is aryl as defined herein.

"Arylalkyl" as used herein may mean an aryl, as defined herein, appended to the parent molecular moiety through an alkyl, as defined herein.

"Arylalkoxy" as used refers to the structure -OR, wherein R is arylalkyl as defined herein.

"Copolymer" as used herein may mean a polymer derived from two or more structural units or monomeric species, as opposed to a homopolymer, which is derived from only one structural unit or monomeric species.

"C₃-C₈ cycloalkyl" as used herein may mean cyclopropyl, cyclobutyl, cyclopentyl, cyclohexyl, cycloheptyl or cyclooctyl.

"C₃-C₈ cycloalkyloxy" as used herein refers to the structure -OR, wherein R is C₃-C₈ cycloatlkyl as defined herein.

"Halo" as used herein may be a substituent to which the prefix is attached is substituted with one or more independently selected halogen radicals. For example, "C₁-C₆ haloalkyl" means a C₁-C₆ alkyl substituent wherein one or more hydrogen atoms are replaced with independently selected halogen radicals. Non-limiting examples of C₁-C₆ haloalkyl include chloromethyl, 1-bromoethyl, fluoromethyl, difluoromethyl, trifluoromethyl, and 1,1,1-trifluoroethyl. It should be recognized that if a substituent is substituted by more than one halogen radical, those halogen radicals may be identical or different (unless otherwise stated).

"Halogen" or "halogen atom" as used herein may mean a fluorine, chlorine, bromine or iodine atom.

"Heteroaryl" as used herein may mean any aromatic heterocyclic ring which may comprise an optionally benzocondensed 5 or 6 membered heterocycle with from 1 to 3 heteroatoms selected among N, O or S. Non limiting examples of heteroaryl groups may include pyridyl, pyrazinyl, pyrimidinyl, pyridazinyl, indolyl, imidazolyl, thiazoyl, isothiazolyl, pyrrolyl, phenyl-pyrrolyl, furyl, phenyl-furyl, oxazolyl, isoxazotyl, pyrazolyl, thienyl, benzothienyl, isoindolinyl, benzoimidazolyl, quinolinyl, isoquinolinyl, 1,2,3-triazolyl, 1-phenyl-1,2,3-triazolyl, and the like.

"Member atom" as used herein refers to a polyvalent atom (e.g., a C, O, N, or S atom) in a chain that constitutes a part of the chain. Member atoms will be substituted up to their normal valence. For example, in a chain having one carbon atom as a member atom, the carbon atom will be further substituted with two additional groups, such as hydrogen atoms or other substituents. For example, a chain having one carbon atom as a member atom could be -CH₂-, -CH(CH₃)-, or -C(CH₃)₂-.

"Polycarbonate" as used herein may mean an oligomer or polymer comprising residues of one or more polymer structural units, or monomers, joined by carbonate linkages.

"Straight or branched C₁-C₃ alkyl" or "straight or branched C₁-C₃ alkoxy" as used herein may mean methyl, ethyl, n-propyl, isopropyl, methoxy, ethoxy, n-propoxy and isopropoxy.

"Thioalkoxy" as used herein refers to the structure -SR, wherein R is alkyl as defined herein.

Unless otherwise indicated, each of the foregoing groups may be unsubstituted or substituted, provided that the substitution does not significantly adversely affect synthesis, stability, or use of the compound.

The terms "structural unit" and "monomer" are interchangeable as used herein.

In accordance with a convention used in the art, the group:

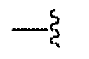

is used in structural formulae herein to depict a bond that is the point of attachment of the moiety or substituent to the core or backbone structure.

Block copolymers disclosed herein include polydiorganosiloxane-polycarbonate block copolymers. A block copolymer is formed from two or more different monomer blocks joined together to form the backbone of the polymer. When only two blocks are present, the block copolymer is called a diblock copolymer. Structures A and B below provide two illustrations of block copolymers made from silicone blocks S and polycarbonate blocks C:

-S-C-S-C-S-C- Structure A

-S-S-C-S-S-C-S-S- Structure B

The block copolymers disclosed herein may be the reaction products of at least one hydroxyaryl end-capped polydiorganosiloxane, with at least one bisphenol compound and a carbonate precursor.

The block copolymers disclosed herein include polydiorganosiloxane blocks, which may be derived from diorganosiloxane-containing dihydroxy compounds (also referred to herein as "hydroxyaryl end-capped polydiorganosiloxanes") that contain diorganosiloxane units of formula (a): 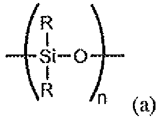 wherein each occurrence of R is the same or different, and is a C₁-C₁₃ monovalent organic group. For example, R can be a C₁-C₁₃ alkyl group, C₁-C₁₃ alkoxy group, C₂-C₁₃ alkenyl group, C₂-C₁₃ alkenyloxy group, C₃-C₆ cycloalkyl group, C₃-C₆ cycloalkoxy group, C₆-C₁₄ aryl group, C₆-C₁₀ aryloxy group, C₇-C₁₃ aralkyl group, C₇-C₁₃ aralkoxy group, C₇-C₁₃ alkylaryl group, or C₇-C₁₃ alkylaryloxy group. For example, in some embodiments, R can be a C₁-C₁₃ alkyl group, such as a C₁-C₄ alkyl group, for example methyl, ethyl, n-propyl, isopropyl or n-butyl. The foregoing groups can be fully or partially halogenated with fluorine, chlorine, bromine, or iodine, or a combination thereof. Combinations of the foregoing R groups can be used in the same polydiorganosiloxane block.

The value of n in formula (a) can vary widely depending on the type and relative amount of each of the different units in the polydiorganosiloxane block, the desired properties of the block copolymer, and other such considerations. Generally, n can have an average value of 2 to 200, specifically 20 to 90, more specifically 40 to 50. For example, n can have an average value of 40, 41, 42, 43, 44, 45, 46, 47, 48, 49 or 50. Where n is of a lower value, e.g., less than 40, it can be desirable to use a relatively larger amount of the units containing the polydiorganosiloxane when preparing the block copolymers described herein. Conversely, where n is of a higher value, e.g., greater than 40, it can be desirable to use a relatively lower amount of the units containing the polydiorganosiloxane when preparing the block copolymers described herein. The notation "Dn" will be used herein to refer to the average number of diorganosiloxane units; for example, D45 means that the polydiorganosiloxane blocks have an average value for n of 45.

The polydiorganasilaxane block may make up 2 wt% to 90 wt% of the block copolymer. In embodiments, the polydiorganosiloxane block may make up 50 wt% to 90 wt%, 55 wt% to 80 wt%, or 50 wt% to 70 wt% of the block copolymer. In embodiments, the polydiorganosiloxane block may make up 2 wt%, 3 wt%, 4 wt%, 5 wt%, 6 wt%, 7 wt%, 8 wt%, 9 wt%, 10 wt%, 11 wt%, 12 wt%, 13 wt%, 14 wt%, 15 wt%, 16 wt%, 17 wt%, 18 wt%, 19 wt%, 20 wt%, 21 wt%, 22 wt%, 23 wt%, 24 wt%, 25 wt%, 26 wt%, 27 wt%, 28 wt%, 29 wt%, 30 wt%, 31 wt%, 32 wt%, 33 wt%, 34 wt%, 35 wt%, 36 wt%, 37 wt%, 38 wt%, 39 wt%, 40 wt%, 41 wt%, 42 wt%, 43 wt%, 44 wt%, 45 wt%, 46 wt%, 47 wt%, 48 wt%, 49 wt%, 50 wt%, 51 wt%, 52 wt%, 53 wt%, 54 wt%, 55 wt%, 56 wt%, 57 wt%, 58 wt%, 59 wt%, 60 wt%, 61 wt%, 62 wt%, 63 wt%, 64 wt%, 65 wt%, 66 wt%, 67 wt%, 68 wt%, 69 wt%, 70 wt%, 71 wt%, 72 wt%, 73 wt%, 74 wt%, 75 wt%, 76 wt%, 77 wt%, 78 wt%, 79 wt%, 80 wt%, 81 wt%, 82 wt%, 83 wt%, 84 wt%, 85 wt%, 86 wt%, 87 wt%, 88 wt%, 89 wt%, or 90 wt% of the block copolymer.

The polydiorganosiloxane blocks are provided by repeating structural units of formula (III): 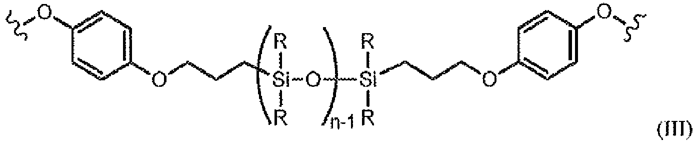 wherein R and n are as defined above.

Polydiorganosiloxane-polycarbonates comprising units of formula (III) can be derived from the corresponding dihydroxy polydiorganosiloxane (IIIa): 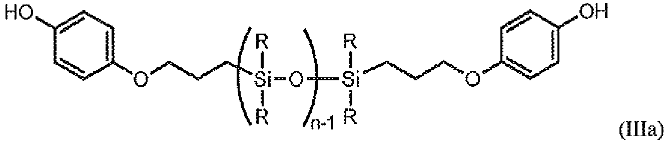 wherein R and n are as defined above.

### Synthesis of dihydroxypolydiorganosiloxanes

Dihydroxy polydiorganodisiloxanes such as those of formulae (Ia), (IIa) and (IIIa) above can be made by effecting a platinum-catalyzed addition between a siloxane hydride of formula (b): 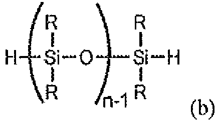 wherein R and n are as previously defined, and an unsaturated monohydric phenol. Exemplary unsaturated monohydric phenols that may be used to prepare the dihydroxy polydiorganosiloxanes of formulae (Ia), (IIa) and (IIIa) include 4-vinylphenol, 4-vinyloxyphenol and 4-allyloxyphenol.

4-vinylphenol can be prepared *via* any means known in the art. For example, it can he prepared *via* a Knoevenagel condensation of 4-hydroxyaldehyde and malonic acid in the presence of a base such as piperidine, as illustrated in Scheme 1. (See Simpson et al. Tetrahedron Lett. 46 (2005) 6893-6896).

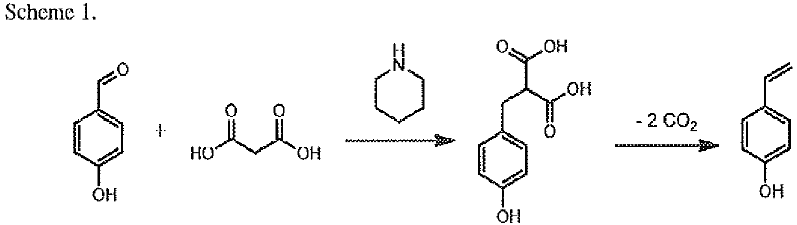

4-vinyloxyphenol and 4-allyloxyphenol can be prepared *via* any means known in the art. For example, they can be prepared *via* a Williamson ether synthesis using 1,4-dihydroxybenzene and the appropriate ω-halogenated 1-alkene (e.g., vinyl bromide or allyl bromide), as illustrated in Scheme 2. (See Gautier et a/., Org. Lett. 7 (2005) 1207-1210.) Note that Scheme 2 illustrates the synthesis of 4-allyloxyphenol; the synthesis of 4-vinyloxyphenol would proceed similarly, starting with vinyl bromide rather than allyl bromide. large scale Williamson ether synthesis of aromatic ether compounds has also been reported (U.S. Patent No. 4,914,238).

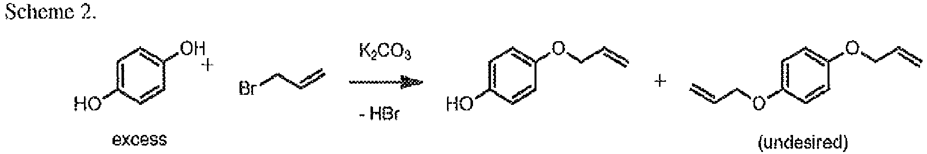

The block copolymers of the present disclosure also include polycarbonate blocks. The polycarbonate blocks may have repeating structural units of the formula (i): 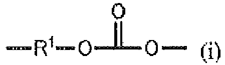 wherein R¹ may comprise any suitable organic group, such as an aliphatic, alicyclic, or aromatic group, or any combination thereof. In certain embodiments, R¹ in the carbonate units of formula (i) may be a C₆-C₃₆ aromatic group wherein at least one moiety is aromatic.

In one embodiment, each R¹ is an aromatic organic group, for example a group of the Formula (ii):

-A¹-Y-A²- (ii)

wherein each of A¹ and A² is a monocyclic divalent arylene group and Y is a bridging group having one or two member atoms that separate A¹ from A². In an exemplary embodiment, one member atom separates A¹ from A², with illustrative examples of such groups including - O-, -S-, -S(O)-, -S(O)₂-, -C(O)-, methylene, cyclohexyl-methylene, 2-[2.2.1]-bicycloheptylidene, ethylidene, isopropylidene, neopentylidene, cyclohexylidene, cyclopentadecylidene, cyclododecylidene, and adamantylidene. The bridging group Y may be a hydrocarbon group or a saturated hydrocarbon group such as ethylene, cyclohexylidene, or isopropylidene.

Each R¹ may be derived from a dihydroxy monomer unit. The dihydroxy monomer unit may have formula (iii):

HO-A¹-Y-A²-OH (iii)

wherein Y, A¹ and A² are as described above. The dihydroxy monomer unit of formula (iii) may include bisphenol compounds of formula (iv): 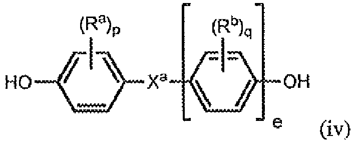 wherein X^{a} may be a bridging group connecting the two hydroxy-substituted aromatic groups, where the bridging group and the hydroxy substituent of each C₆ arylene group are disposed ortho, meta, or para (specifically para) to each other on the C₆ arylene group. For example, the bridging group X^{a} may be single bond, -O-, -S-, -C(O)-, or a C₁-C₁₈ organic group. The C₁-C₁₈ organic bridging group may be cyclic or acyclic, aromatic or nonaromatic, and can further comprise heteroatoms such as halogens, oxygen, nitrogen, sulfur, silicon, or phosphorous. The C₁-C₁₈ organic group can be disposed such that the C₆ arylene groups connected thereto are each connected to a common alkylidene carbon or to different carbons of the C₁-C₁₈ organic bridging group. R^{a} and R^{b} may each represent a halogen, C₁-C₁₂ alkyl group or combination thereof. For example, R^{a} and R^{b} may each be a C₁-C₃ alkyl group, specifically methyl, disposed meta to the hydroxy group on each arylene group. The designation (e) is 0 or 1. The numbers p and q are each independently integers of 0 to 4. It will be understood that R^{a} is hydrogen when p is 0, and likewise R^{b} is hydrogen when q is 0.

In certain embodiments, X^{a} may be substituted or unsubstituted C₃-C₁₈ cycloalkylidene, a C₁-C₂₅ alkylidene of formula -C(R^{c})(R^{d})- wherein R^{c} and R^{d} are each independently hydrogen, C₁-C₁₂ alkyl, C₁-C₁₂ cycloalkyl, C₇-C₁₂ arylalkyl, C₁-C₁₂ heteroalkyl, or cyclic C₇-C₁₂ heteroarylalkyl, or a group of the formula -C(=R^{e})- wherein R^{e} is a divalent C₁-C₁₂ hydrocarbon group. This may include methylene, cyclohexylmethylene, ethylidene, neopentylidene, and isopropylidene, as well as 2-[2.2.1]-bicycloheptylidene, cyclohexylidene, cyclopentylidene, cyclododecylidene, and adamantylidene. A specific example wherein X^{a} is a substituted cycloalkylidene is the cyclohexylidene-bridged, alkyl-substituted bisphenol of formula (v): 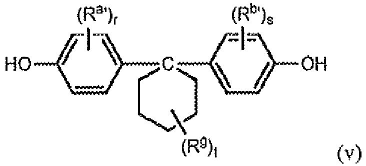 wherein R^{a'} and R^{b'} are each independently C₁-C₁₂ alkyl, R⁸ is C₁-C₁₂ alkyl or halogen, r and s are each independently 1 to 4, and t is 0 to 10. R^{a'} and R^{b'} may be disposed meta to the cyclohexylidene bridging group. The substituents R^{a'}, R^{b'} and R^{g} may, when comprising an appropriate number of carbon atoms, be straight chain, cyclic, bicyclic, branched, saturated, or unsaturated. For example, R^{a'}, R^{b'} and R^{g} may be each independently C₁-C₄ alkyl, r and s are each 1, and t is 0 to 5. In another example, R^{a'}, R^{b'} and R⁸ may each be methyl, r and s are each 1, and t is 0 or 3. The cyclohexylidene-bridged bisphenol can be the reaction product of two moles of o-cresol with one mole of cyclohexanone. In another example, the cyclohexylidene-bridged bisphenol may be the reaction product of two moles of a cresol with one mole of a hydrogenated isophorone (e.g., 1,1,3-trimethyl-3-cyclohexane-5-one). Such cyclohexane-containing bisphenols, for example the reaction product of two moles of a phenol with one mole of a hydrogenated isophorone, are useful for making polycarbonate polymers with high glass transition temperatures and high heat distortion temperatures. Cyclohexyl bisphenol-containing polycarbonates, or a combination comprising at least one of the foregoing with other bisphenol polycarbonates, are supplied by Bayer Co. under the APEC^{™} trade name.

In another example, X^{a} may be a substituted C₃-C₁₈ cycloalkylidene of the formula (vi): 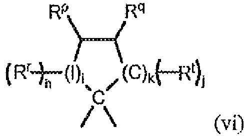 wherein R^{r}, R^{p}, R^{q} and R^{t} are each independently hydrogen, halogen, oxygen, or C₁-C₁₂ organic groups; I is a direct bond, a carbon, or a divalent oxygen, sulfur, or -N(Z)- where Z is hydrogen, halogen, hydroxy, C₁-C₁₂ alkyl, C₁-C₁₂ alkoxy, C₆-C₁₂ aryl, or C₁-C₁₂ acyl; h is 0 to 2, j is 1 or 2, i is an integer of 0 or 1, and k is an integer of 0 to 3, with the proviso that at least two of R^{r}, R^{p}, R^{q} and R^{t} taken together are a fused cycloaliphatic, aromatic, or heteroaromatic ring. It will be understood that where the fused ring is aromatic, the ring as shown in formula (vi) will have an unsaturated carbon-carbon linkage where the ring is fused. When i is 0, h is 0, and k is 1, the ring as shown in formula (vi) contains 4 carbon atoms; when i is 0, h is 0, and k is 2, the ring as shown contains 5 carbon atoms, and when i is 0, h is 0, and k is 3, the ring contains 6 carbon atoms. In one example, two adjacent groups (e.g., R^{q} and R^{t} taken together) form an aromatic group, and in another embodiment, R^{q} and R^{t} taken together form one aromatic group and R¹ and R^{p} taken together form a second aromatic group. When R^{q} and R^{t} taken together form an aromatic group, R^{p} can be a double-bonded oxygen atom, i.e., a ketone.

Other useful dihydroxy monomer units include aromatic dihydroxy compounds of formula (vii) 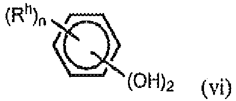 wherein each R^{h} is independently a halogen atom, a C₁-C₁₀ hydrocarbyl such as a C₁-C₁₀ alkyl group, a halogen substituted C₁-C₁₀ hydrocarbyl such as a halogen-substituted C₁-C₁₀ alkyl group, and n is 0 to 4. The halogen, when present, is usually bromine.

Bisphenol-type dihydroxy aromatic compounds may include the following: 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydioxyphenyl)-1-naphthylmethane, 1,2-bis(4-hydroxyphenyl)ethane, 1,1-bis(4-hydroxyphenyl)-1-phenylcthane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis(hydroxyphenyl)cyclopentane, 1,1-bis(4-hydroxyphenyl)cyclohexane, 1,1-bis(4-hydroxy-3-methylphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, (alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorene, 2,7-dihydroxypyrene, 6,6'-dihydroxy-3,3,3',3'-tetramethylspiro(bis)indane ("spirobiindane bisphenol"), 3,3-bis(4-hydroxyphenyl)phthalide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, and the like, as well as combinations comprising at least one of the foregoing dihydroxy aromatic compounds.

Examples of the types of bisphenol compounds represented by formula (iii) may include 1,1-bis(4-hydroxyphenyl)methane, 1,1-bis(4-hydroxyphenyl)ethane, 2,2-bis(4-hydroxyphenyl)propane (also referred to as "bisphenol-A" or "BPA"), 2,2-bis(4-hydroxyphenyl)butane, 2,2-bis(4-hydroxyphenyl)octane, 1,1-bis(4-hydroxyphenyl)propane, 1,1-bis(4-hydroxyphenyl)n-butane, 2,2-bis(4-hydroxy-1-methylphenyl)propane, 1,1-his(4-hydroxy-t-butylphenyl)propane, 3,3-bis(4-hydroxyphenyl)phthalimidine, 2-phenyl-3,3-bis(4-hydroxyphenyl)phthalimidine ("PPPBP"), 9,9-bis(4-hydroxyphenyl)fluorene, and 1,1-bis(4-hydroxy-3-methylphenyl)cyclohexane ("DMBPC"). Combinations comprising at least one of the foregoing dihydroxy aromatic compounds can also be used.

The polycarbonate block may make up 10 wt% to 98 wt% of the brock copolymer. For example, the polycarbonate block may make up 10 wt% to 50 wt%, 20 wt% to 45 wt%, or 30 wt% to 50 wt% of the block copolymer. In embodiments, the polydiorganosiloxane block may make up 10 wt%, 11 wt%, 12 wt%, 13 wt%, 14 wt%, 15 wt%, 16 wt%, 17 wt%, 18 wt%, 19 wt%, 20 wt%, 21 wt%, 22 wt%, 23 wt%, 24 wt%, 25 wt%, 26 wt%, 27 wt%, 28 wt%, 29 wt%, 30 wt%, 31 wt%, 32 wt%, 33 wt%, 34 wt%, 35 wt%, 36 wt%, 37 wt%, 38 wt%, 39 wt%, 40 wt%, 41 wt%, 42 wt%, 43 wt%, 44 wt%, 45 wt%, 46 wt%, 47 wt%, 48 wt%, 49 wt%, 50 wt%, 51 wt%, 52 wt%, 53 wt%, 54 wt%, 55 wt%, 56 wt%, 57 wt%, 58 wt%, 59 wt%, 60 wt%, 61 wt%, 62 wt%, 63 wt%, 64 wt%, 65 wt%, 66 wt%, 67 wt%, 68 wt%, 69 wt%, 70 wt%, 71 wt%, 72 wt%, 73 wt%, 74 wt%, 75 wt%, 76 wt%, 77 wt%, 78 wt%, 79 wt%, 80 wt%, 81 wt%, 82 wt%, 83 wt%, 84 wt%, 85 wt%, 86 wt%, 87 wt%, 88 wt%, 89 wt%, 90 wt%, 91 wt%, 92 wt%, 93 wt%, 94 wt%, 95 wt%, 96 wt%, 97 wt%, or 98 wt% of the block copolymer.

The polycarbonate block may be a copolymer comprising repeating units of formula (i) as described above, and other types of polymer units such as polyester units. A specific type of copolymer may be a polyester-polycarbonate. The polyester-polycarbonate block may comprise repeating units of formula (i), as described above, and repeating ester units of formula (viii): 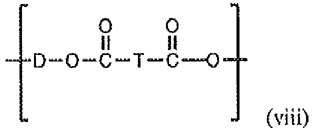 wherein O-D-O of formula (viii) is a divalent group derived from a dihydroxy compound, and D may be, for example, one or more alkyl containing C₆-C₂₀ aromatic group(s), or one or more C₆-C₂₀ aromatic group(s), a C₂-C₁₀ alkylene group, a C₆-C₂₀ alicyclic group, a C₆-C₂₀ aromatic group or a polyoxyalkylene group in which the alkylene groups contain 2 to 6 carbon atoms, specifically 2, 3, or 4 carbon atoms. D may be a C₂-C₃₀ alkylene group having a straight chain, branched chain, or cyclic (including polycyclic) structure. O-D-O may be derived from an aromatic dihydroxy compound of formula (iii), as described above.

Other examples of aromatic dicarboxylic acids that may be used to prepare the polyester units include isophthalic or terephthalic acid, 1,2-di(p-carboxyphenyl)ethane, 4,4'-dicarboxydiphenyl ether, 4,4'-bishenzoic acid, and combinations comprising at least one of the foregoing acids. Acids containing fused rings can also be present, such as in 1,4-, 1,5-, or 2,6-naphthalenedicarboxylic acids. Specific dicarboxylic acids may be terephthalic acid, isophthalic acid, naphthalene dicarboxylic acid, cyclohexane dicarboxylic acid, or combinations thereof. A specific dicarboxylic acid comprises a combination of isophthalic acid and terephthalic acid herein the weight ratio of isophthalic acid to terephthalic acid is 91:9 to 2:98.

Overall, D of the repeating units of formula (viii) may be a C₂-C₆ alkylene group and T may be p-phenylene, m-phenylene, naphtalene, a divalent cycloaliphatic group, or a combination thereof. This class of polyester includes the poly(alkylene terephthalates).

The polyester unit of a polyester-polycarbonate block may be derived from the reaction of a combination of isophthalic and terephthalic diacids (or derivatives thereof) with resorcinol. In another embodiment, the polyester unit of a polyester-polycarbonate may be derived from the reaction of a combination of isophthalic acid and terephthalic acid with bisphenol-A. In an embodiment, the polycarbonate units may be derived from bisphenol-A. In another specific embodiment, the polycarbonate units may be derived from resorcinol and bisphenol-A in a molar ratio of resorcinol carbonate units to bisphenol-A carbonate units of 1:99 to 99:1.

Useful polyesters may include aromatic polyesters, poly(alkylene esters) including poly(alkylene arylates), and poly(cycloalkylene diesters). Aromatic polyesters may have a polyester structure according to formula (viii), wherein D and T are each aromatic groups as described hereinabove. Useful aromatic polyesters may include, for example, poly(isophthalate-terephthalate-resorcinol) esters, poly(isophthalate-terephthalate-bisphenol-A) esters, poly[(isophthalate-terephthalate-resorcinol) ester-co-(isophthalate-terephthalate-bisphenol-A)] ester, or a combination comprising at least one of these.

The disclosure also provides a process for preparing a polydiorganosiloxane-polycarbonate block copolymer. The method comprises providing a composition that comprises a polydiorganosiloxane compound, such as a hydroxyaryl end-capped polydiorganosiloxane described herein (e.g., a compound of formula (Ia), (IIa) or (IIIa)). The polydiorganosiloxane compound is then reacted with a dihydroxy monomer unit, such as a compound of formula (iii), and a carbonate precursor, to form the polydiorganosiloxane-polycarbonate block copolymer.

The block copolymers can be prepared by providing a hydroxyaryl end-capped polydiorganosiloxane compound, and then synthesizing the polycarbonate blocks from the dihydroxy monomer unit and the carbonate precursor by a process such as interfacial polymerization Although the reaction conditions for interfacial polymerization can vary, an exemplary process generally involves dissolving or dispersing one or more dihydric phenol reactants, such as a monomer of formula (iii), in aqueous caustic soda or potash, adding the resulting mixture to a water-immiscible solvent medium, and contacting the reactants with a carbonate precursor in the presence of a catalyst such as, for example, a tertiary amine or a phase transfer catalyst, under controlled pH conditions, e.g., 8 to 10. The most commonly used water immiscible solvents include methylene chloride, 1,2-dichloroethane, chlorobenzene, toluene, and the like.

Exemplary carbonate precursors may include, for example, a carbonyl halide such as carbonyl bromide or carbonyl chloride, or a haloformate such as a bishaloformate of a dihydric phenol (e.g., the bischloroformate of bisphenol-A, hydroquinone, or the like) or a glycol (e.g., the bishaloformate of ethylene glycol, neopentyl glycol, polyethylene glycol, or the like). Combinations comprising at least one of the foregoing types of carbonate precursors can also be used. In certain embodiments, the carbonate precursor is phosgene, a triphosgene, diacyl halide, dihaloformate, dicyanate, diester, diepoxy, diarylcarbonate, dianhydride, dicarboxylic acid, diacid chloride, or any combination thereof. An interfacial polymerization reaction to form carbonate linkages may use phosgene as a carbonate precursor, and is referred to as a phosgenation reaction.

Among tertiary amines that can be used are aliphatic tertiary amines such as triethylamine, tributylamine, cycloaliphatic amines such as N,N-diethyl-cyclohexylamine and aromatic tertiary amines such as N,N-dimethylaniline.

Among the phase transfer catalysts that can be used are catalysts of the formula (R³⁰)₄Q⁺X, wherein each R³⁰ is the same or different, and is a C₁-C₁₀ alkyl group; Q is a nitrogen or phosphorus atom; and X is a halogen atom, C₁-C₈ alkoxy group, or C₆-C₁₈ aryloxy group. Exemplary phase transfer catalysts include, for example, [CH₃(CH₂)₃]₄NX, [CH₃(CH₂)₃]₄PX, [CH₃(CH₂)₅]₄NX, [CH₃(CH₂)₆]₄NX, [CH₃(CH₂)₄]₄NX, CH₃[CH₃(CH₂)₃]₃NX, and CH₃[CH₃(CH₂)₂]₃NX, wherein X is Cl⁻, Br⁻, a C₁-C₈ alkoxy group or a C₆-C₁₈ aryloxy group. An effective amount of a phase transfer catalyst can be 0.1 to 10 wt % based on the weight of bisphenol in the phosgenation mixture. For example, an effective amount of phase transfer catalyst can be 0.5 to 2 wt % based on the weight of bisphenol in the phosgenation mixture.

All types of polycarbonate end groups are contemplated as being useful in the block copolymers, provided that such end groups do not significantly adversely affect desired properties of the compositions. An end-capping agent (also referred to as a chain-stopper) can be used to limit molecular weight growth rate, and so control molecular weight of the polycarbonate. Exemplary chain-stoppers include certain monophenolic compounds (i.e., phenyl compounds having a single free hydroxy group), monocarboxylic acid chlorides, and/or monochloroformates. Phenolic chain-stoppers are exemplified by phenol and C₁-C₂₂ alkyl-substituted phenols such as p-cumyl-phenol, resorcinol monobenzoate, and p-tertiary-butylphenol, cresol, and monoethers of diphenols, such as p-methoxyphenol. Alkyl-substituted phenols with branched chain alkyl substituents having 8 to 9 carbon atoms can be specifically be used.

End groups can be derived from the carbonyl source (i.e., the diaryl carbonate), from selection of monomer ratios, incomplete polymerization, chain scission, and the like, as well as any added end-capping groups, and can include derivatizable functional groups such as hydroxy groups, carboxylic acid groups, or the like. In an embodiment, the endgroup of a polycarbonate can comprise a structural unit derived from a diaryl carbonate, where the structural unit can be an endgroup. In a further embodiment, the endgroup is derived from an activated carbonate. Such endgroups can derive from the transesterification reaction of the alkyl ester of an appropriately substituted activated carbonate, with a hydroxy group at the end of a polycarbonate polymer chain, under conditions in which the hydroxy group reacts with the ester carbonyl from the activated carbonate, instead of with the carbonate carbonyl of the activated carbonate. In this way, structural units derived from ester containing compounds or substructures derived from the activated carbonate and present in the melt polymerization reaction can form ester endgroups. In an embodiment, the ester endgroup derived from a salicylic ester can be a residue of bis(methyl salicyl) carbonate (BMSC) or other substituted or unsubstituted bis(alkyl salicyl) carbonate such as bis(ethyl salicyl) carbonate, bis(propyl salicyl) carbonate, bis(phenyl salicyl) carbonate, bis(benzyl salicyl) carbonate, or the like. In a specific embodiment, where BMSC is used as the activated carbonyl source, the endgroup is derived from and is a residue of BMSC, and is an ester endgroup derived from a salicylic acid ester, having the structure of formula (viii):

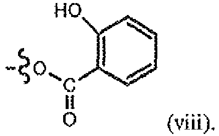

Polycarbonate blocks with branching groups are also contemplated as being useful, provided that such branching does not significantly adversely affect desired properties of the polycarbonate. Branched polycarbonate blocks can be prepared by adding a branching agent during polymerization. These branching agents include polyfunctional organic compounds containing at least three functional groups selected from hydroxyl, carboxyl, carboxylic anhydride, haloformyl, and mixtures of the foregoing functional groups. Specific examples include trimellitic acid, trimellitic anhydride, trimellitic trichloride, tris-p-hydroxy phenyl ethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl)alpha, alpha-dimethyl benzyl)phenol), 4-chloroformyl phthalic anhydride, trimesic acid, and benzophenone tetracarboxylic acid. The branching agents can be added at a level of 0.05 to 2.0 wt %. Mixtures comprising linear polycarbonates and branched polycarbonates can be used.

A block copolymer, such as described above, may be formed, shaped, molded or injection molded into an article. The block copolymers can be molded into useful shaped articles by a variety of means such as injection molding, extrusion, rotational molding, blow molding and thermoforming to form articles. In some embodiments, the article may be a molded article, such as a molded plaque. The article may have at least one dimension of at least 1 mm, 1.5 mm, 2.0 mm, 2.5 mm, 3.0 mm, 3.5 mm, 4.0 mm, 4.5 mm, 5.0 mm or more.

Other articles include, for example, various components for cell phones and cell phone covers, components for computer housings, computer housings and business machine housings such as housings for monitors, handheld electronic device housings such as computer or business machine housings, housings for hand-held devices, components for light fixtures or home appliances, components for medical applications or devices, components for interior or exterior components of an automobile, lenses (auto and non-auto) such as components for film applications, greenhouse components, sun room components, or fire helmets, and the like.

In certain embodiments, an article comprising a block copolymer, as described above, may be selected from automotive bumpers, other automotive exterior components, automobile mirror housings, automobile wheel covers, automobile instrument panels and trim, automobile glove boxes, automobile door hardware and other interior trim, automobile exterior lights, automobile parts within the engine comportment, plumbing equipment, valves and pumps, air conditioning heating and cooling parts, furnace and heat pump parts, computer parts, electronics parts, projector parts, electronic display parts, copier parts, scanner parts, electronic printer toner cartridges, hair driers, irons, coffee makers, toasters, washing machines, microwaves, ovens, power tools, electric components, lighting parts, dental instruments, medical instruments, cookware, medical instrument trays, animal cages, fibers, laser welded medical devices, and fiber optics.

The article may be produced by a manufacturing process. The process may comprise the steps of (a) providing a composition comprising one or more block copolymers described above. The composition from step (a) may then be (b) melted, for example, at 200-400 °C in an extruder. The melted composition of step (b) may then be (c) extruded, and (d) the composition may be isolated or chopped. The article of manufacture may further be produced by the step of (e) drying the composition.

The present invention has multiple aspects, illustrated by the following nonlimiting examples.

### EXAMPLES

### Example 1: Synthesis of End-Capping Groups

The following are some examples of procedures to prepare end-clapping groups; these procedures can be modified to use other amounts of components or variants of the components, as appreciated in the art.

4-allyloxyphenol: Hydroquinone (ca. 500 g, 4.5 moles) and K₂CO₃ (ca. 315 g, 2.3 moles) will be dissolved in DMF (ca. 1 to 1.5 L). Allyl bromide (ca. 80 mL, 0.93 moles) will be added slowly while stirring the reaction mixture. Subsequently the reaction mixture will be stirred for 24-48 h at elevated temperatures between 60-100 °C.

The reaction mixture will then be poured into cold water and neutralized with 1M HCl solution. The aqueous layer will be extracted with CH₂Cl₂ and the resulting organic layer will be dried with MgSO₄ and filtered. Final purification of the crude reaction product will be done by fractional distillation under reduced pressure.

Note: this procedure can also be conducted using allyl chloride or allyl iodide in place of allyl bromide.

References: Gautier et al., Org. Lett. 2005, 7, 1207-1210; U.S. Patent 4,914,238.

### 4-vinyloxyphenol (not inventive):

This compound will be prepared in a manner analogous to that shown above for 4-allyloxyphenol, using vinyl bromide in place of allyl bromide as a starting material. Alternatively, vinyl chloride or vinyl iodide may be used.

### 4-vinylphenol (not inventive):

4-Hydroxybenzaldehyde (ca. 110 g, 1.0 moles) and malonic acid (ca. 415 g, 4.0 moles) will be dissolved in pyridine (ca. 2 L). Piperidine (ca. 150 mL, 1.5 moles) will be added to this mixture and the total mixture will be stirred and heated to reflux (ca. 115 °C).

After ca, 4-8 h of stirring at reflux, the mixture will be cooled to room temperature and toluene (ca. 4 L) will be added. The pyridine and toluene will be co-evaporated at 30-40 °C under reduced pressure. The resulting crude reaction mixture will be purified by fractional distillation under reduced pressure.

Reference: Simpson et al., Tetrahedron Lett. 2005, 46, 6893-6896.

### Example 2: Synthesis of End-Capped Polydimethylsiloxanes

The following is one example of a procedure to prepare a hydroxyaryl end-capped polydimethylsiloxane. This procedure can be modified to use other amounts of components or variants of the components, as appreciated in the art.

Octamethylcyclotetrasiloxane (8.3 kg, 28.0 moles), tetramethyldisiloxane (330 g, 2.46 moles) and Filtrol 20 (86 g, 1% by weight) will be combined in a 12 L flask and heated to 45 °C for 2 hours. The temperature will be raised to 100 °C and the mixture rapidly agitated for 5 hours. The mixture will be allowed to cool then filtered through a plug of Celite filtering aid. To the crude product will be added a mixture of the hydroxyaryl end-capping agent (4.72 moles) and Karstedt's platinum catalyst (1.57 g, 10 ppm Pt) at a rate of 40 g/minute. Reaction completion will be monitored by the disappearance of the siloxane hydrogen in the FTIR spectrum. The reaction product can be stripped of volatiles using a falling thin film evaporator operating at 200 C and 200 Pa (1.5 torr). The material can be used without further purification.

### Example 3: Synthesis of Polycarbonate-Polysiloxane Copolymers

The following is one example of a procedure to prepare a polycarbonate-poly siloxane copolymer; this procedure can be modified to use other amounts of components or variants of the components, as appreciated in the art.

To a formulation tank will be added dichloromethane (8 L), DI water (9 L), bisphenol-A (4000 g, 17.5 moles), p-cumylphenol (160 g, 0.75 mole), triethylamine (30 g, 0.30 mole) and sodium gluconate (10 g). The mixture will be transferred to a batch reactor. The formulation tank may be rinsed with dichloromethane (3 L) which can be transferred to the batch reactor. The reactor agitator will be started and circulation flow set at 80 L/min. Phosgene flow to the reactor will be initiated (segment 1: 230 g, 80 g/min rate). A pH target of 10.0 will be maintained throughout the batch by the DCS controlled addition of 33 % aqueous sodium hydroxide. After 230 g phosgene addition to the batch reactor, the tubular reactor will be initiated to add the appropriate hydroxyaryl end-capped polydiorganosiloxane chloroformate to the batch reactor (312 g, 0.08 mole, 20 wt % solution in dichloromethane chilled to 10°C). The solution flow rate to the tubular reactor will be 500 g/min (3.1 min addition cycle) with phosgene addition to the tubular reactor at 28 g/min (5 mol phosgene / mol D45 OH group) and 18 % aqueous sodium hydroxide flow to the tubular reactor at 316 g/min (5 mol NaOH / mol phosgene, chilled to 4°C). After completion of siloxane addition via the tubular reactor, the tubular reactor can be flushed with dichloromethane (2 L) and DI water (2 L) to the batch reactor. Phosgene flow will continue to the batch reactor during the tubular reactor cycle (segment 2: 2070 g, 80 g/min rate). The total phosgene addition time to the batch reactor will be 29 minutes. After completion of the phosgene addition, a sample of the reactor will be obtained and verified to be free of un-reacted BPA and free of chloroformate. Mw of the reaction sample can determined by GPC. The reactor will be purged with nitrogen then the batch will be transferred to the centrifuge feed tank.

To the batch in the feed tank will be added dilution dichloromethane (8 L) then the mixture will be purified using a train of liquid - liquid centrifuges. Centrifuge one should remove the brine phase. Centrifuge two should remove the catalyst by extracting the resin solution with aqueous hydrochloric acid (pH 1). Centrifuges three through eight should remove residual ions by extracting the resin solution with DI water. A sample of the resin solution can be tested and verified less than 5 ppm each of ionic chloride and residual triethylamine.

The resin solution will transferred to a precipitation feed tank. The resin can be isolated as a white powder by steam precipitation followed by drying in a cone shaped dryer using heated nitrogen (130°C).

Set forth below are some embodiments of the block copolymer.

### Embodiment 1:

A polycarbonate-polydiorganosiloxane block copolymer, comprising:
(a) at least one block derived from a compound of formula (IIIa): 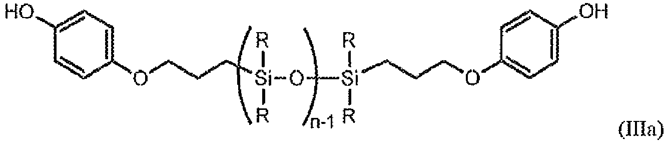 wherein: each R is independently a C₁-C₁₃ monovalent organic group; and n is 2 to 200; and
(b) at least one block comprising repeating units derived from one or more monomers of formula (iii) and a carbonate precursor:

   HO-A¹-Y-A²-OH (iii)

   wherein: each of A¹ and A² comprises a monocyclic divalent arylene group; and Y is a bridging group comprising one or two member atoms.

### Embodiment 2:

The block copolymer of any of Embodiments 1 - 3, wherein each R is independently a C₁-C₄ alkyl group.

### Embodiment 3:

The block copolymer of Embodiment 4, wherein each R is methyl.

### Embodiment 4:

The block copolymer of any of Embodiments 1 - 5, wherein n is 20 to 90.

### Embodiment 5:

The block copolymer of any of Embodiments 1 - 6, wherein n is 40 to 50.

### Embodiment 6:

The block copolymer of any of Embodiments 1 - 7, wherein A¹ and A² are each p-phenylene groups.

### Embodiment 7:

The block copolymer of any of Embodiments 1 - 8, wherein Y is -C(CH₃)₂-.

### Embodiment 8:

The block copolymer of any of Embodiments 1 - 9, wherein the compound of formula (iii) has the following formula:

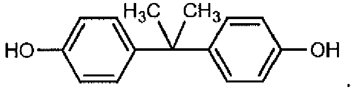

### Embodiment 9:

The block copolymer of any of Embodiments 1 - 10, wherein the carbonate precursor is a carbonyl chloride or a carbonyl bromide,

### Embodiment 10:

The block copolymer of any of Embodiments 1 - 10, wherein the carbonate precursor is phosgene.

### Embodiment 11:

The block copolymer of any of Embodiments 1 - 12, wherein the polydiorganosiloxane block is 2 wt% to 90 wt% of the block copolymer, e.g., 50 wt% to 90 wt% of the block copolymer

### Embodiment 12:

The block copolymer of any of Embodiments 1 - 12, wherein the polydiorganosiloxane block is 55 wt% to 80 wt% of the block copolymer.

### Embodiment 13:

The block copolymer of any of Embodiments 1-14, wherein the polycarbonate block is 10 wt% to 98 wt% of the block copolymer.

### Embodiment 14:

The block copolymer of any of Embodiments 1 - 5, wherein the polycarbonate block is 10 wt% to 50 wt% of the block copolymer.

### Embodiment 15:

The block copolymer of any of Embodiments 1 - 16, wherein the polycarbonate block is 20 wt% to 45 wt% of the block copolymer.

### Embodiment 16:

The block copolymer of any of Embodiments 1 - 16, wherein the polycarbonate block is 30 wt% to 50 wt% of the block copolymer.

## Claims

1. A polycarbonate-polydiorganosiloxane block copolymer, comprising:
(a) at least one block derived from a compound of formula (IIIa): 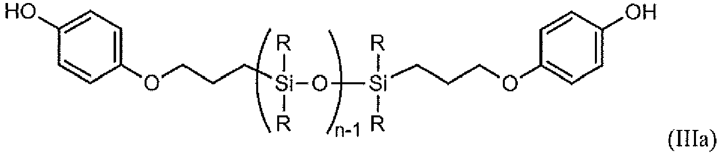 wherein:
each R is independently a C₁-C₁₃ monovalent organic group; and
n is 2 to 200; and
(b) at least one block comprising repeating units derived from one or more monomers of formula (iii) and a carbonate precursor:
HO-A¹-Y-A²-OH (iii)
wherein:
each of A¹ and A² comprises a monocyclic divalent arylene group; and
Y is a bridging group comprising one or two member atoms.

2. The block copolymer of claim 1, wherein each R is independently a C₁-C₄ alkyl group.

3. The block copolymer of claim 2, wherein each R is methyl.

4. The block copolymer of any of claims 1 - 3, wherein n is 20 to 90.

5. The block copolymer of any of claims 1 - 4, wherein n is 40 to 50.

6. The block copolymer of any of claims 1 - 5, wherein A¹ and A² are each p-phenylene groups.

7. The block copolymer of any of claims 1 - 6, wherein Y is -C(CH₃)₂-.

8. The block copolymer of any of claims 1 - 7, wherein the compound of formula (iii) has the following formula:

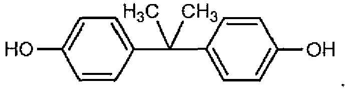

9. The block copolymer of any of claims 1 - 8, wherein the carbonate precursor is a carbonyl chloride or a carbonyl bromide.

10. The block copolymer of any of claims 1 - 8, wherein the carbonate precursor is phosgene.

## Patentansprüche

1. Ein Polycarbonat-Polydiorganosiloxan-Block-Copolymer, das folgendes umfasst:
(a) mindestens einen Block abgeleitet von einer Verbindung der Formel (IIIa): 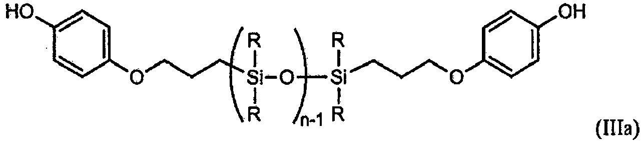 worin:
jedes R unabhängig eine C₁-C₁₃ monovalente organische Gruppe ist; und
n ist 2 bis 200; und
(b) mindestens einen Block umfassend sich wiederholende Einheiten abgeleitet von einem oder mehreren Monomeren der Formel (iii) und einen Carbonatvorläufer:
HO-A¹-Y-A²-OH (iii)
worin:
jedes A¹ und A² eine monozyklische bivalente Arylengruppe umfasst; und
Y ist eine überbrückende Gruppe umfassend ein oder zwei Gliedatome.

2. Das Block-Copolymer gemäß Anspruch 1, worin jedes R unabhängig eine C₁-C₄ Alkylgruppe ist.

3. Das Block-Copolymer gemäß Anspruch 2, worin jedes R Methyl ist.

4. Das Block-Copolymer gemäß irgendeinem der Ansprüche 1 - 3, worin n 20 bis 90 ist.

5. Das Block-Copolymer gemäß irgendeinem der Ansprüche 1 - 4, worin n 40 bis 50 ist.

6. Das Block-Copolymer gemäß irgendeinem der Ansprüche 1 - 5, worin A¹ und A² jeweils p-Phenylengruppen sind.

7. Das Block-Copolymer gemäß irgendeinem der Ansprüche 1 - 6, worin Y -C(CH₃)₂- ist.

8. Das Block-Copolymer gemäß irgendeinem der Ansprüche 1 - 7, worin die Verbindung der Formel (iii) die folgende Formel hat:

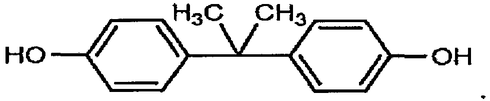

9. Das Block-Copolymer gemäß irgendeinem der Ansprüche 1 - 8, worin der Carbonatvorläufer ein Carbonylchlorid oder ein Carbonylbromid ist.

10. Das Block-Copolymer gemäß irgendeinem der Ansprüche 1 - 8, worin der Carbonatvorläufer Phosgen ist.

## Revendications

1. Copolymère séquencé de polycarbonate-polydiorganosiloxane, comprenant:
(a) au moins un bloc dérivé d'un composé de formule (IIIa) : 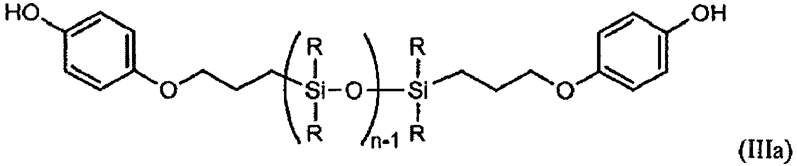 dans laquelle :
chaque R représente indépendamment un groupe organique monovalent en C₁ à C₁₃ ; et
n vaut de 2 à 200 ; et
(b) au moins un bloc comprenant des motifs répétitifs dérivés d'un ou plusieurs monomères de formule (iii) et un précurseur de carbonate :
HO-A¹-Y-A²-OH (iii)
formule dans laquelle :
chacun de A¹ et A² comprend un groupe arylène divalent monocyclique ; et
Y représente un groupe de pontage comprenant un ou deux atomes.

2. Copolymère séquencé selon la revendication 1, dans lequel chaque R représente indépendamment un groupe alkyle en C₁ à C₄.

3. Copolymère séquencé selon la revendication 2, dans lequel chaque R représente un groupe méthyle.

4. Copolymère séquencé selon l'une quelconque des revendications 1 à 3, dans lequel n vaut de 20 à 90.

5. Copolymère séquencé selon l'une quelconque des revendications 1 à 4, dans lequel n vaut de 40 à 50.

6. Copolymère séquencé selon l'une quelconque des revendications 1 à 5, dans lequel A¹ et A² représentent chacun des groupes p-phénylène.

7. Copolymère séquencé selon l'une quelconque des revendications 1 à 6, dans lequel Y représente un groupe -C(CH₃)₂-.

8. Copolymère séquencé selon l'une quelconque des revendications 1 à 7, dans lequel le composé de formule (iii) répond à la formule suivante :

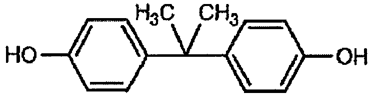

9. Copolymère séquencé selon l'une quelconque des revendications 1 à 8, dans lequel le précurseur de carbonate est un chlorure de carbonyle ou un bromure de carbonyle.

10. Copolymère séquencé selon l'une quelconque des revendications 1 à 8, dans lequel le précurseur de carbonate est du phosgène.
